# FASCICULE DE BREVET EUROPEEN

(11) **EP 0 670 276 B1**
(45) Date de publication et mention de la délivrance du brevet: **28.01.1998**
(21) Numéro de dépôt: 95200464.6
(22) Date de dépôt: 24.02.1995
(51) Int. Cl.: B65G 47/52, B65G 47/96, B65G 47/38, B07C 5/18

(54) **Dispositif de convoyage de produits, notamment de fruits, adapté pour effectuer un triage desdits produits en fonction de critères de sélection prédéterminés**
Fördereinrichtung für Produkte, insbesondere für Früchte, geeignet zum Sortieren von diesen Produkten gemäss definierten Auswahlkriterien
Conveying device for products, especially for fruits, adapted for sorting the said products according the predetermined features of selection

(30) Priorité: 03.03.1994 FR 9402675
(43) Date de publication de la demande: 06.09.1995
(73) Titulaire: MATERIEL POUR L'ARBORICULTURE FRUITIERE (M.A.F.) S.A., F-82000 Montauban (FR)
(72) Inventeur: Blanc, Philippe, F-82000 Montauban (FR)
(74) Mandataire: Cabinet BARRE LAFORGUE & associés

(56) Documents cités:
- EP-A- 0 283 388
- EP-A- 0 540 126
- US-A- 4 830 195

## Description

L'invention concerne un dispositif de convoyage de produits, notamment de fruits, adapté pour effectuer un triage desdits produits en fonction de critères de sélection prédéterminés, tels que poids, aspect externe... Cette invention vise plus particulièrement les dispositifs de convoyage comportant plusieurs supports de types différents le long de la ligne de convoyage, entre lesquels les fruits sont transférés.

Un premier type de dispositif de convoyage ainsi conçu est notamment décrit dans les brevets US-A-5.197.585 et US-A-4.830.195, et comporte une zone de chargement des fruits constituée d'un convoyeur comportant un premier type de support, et une deuxième zone de tri et de déchargement, constituée d'au moins un convoyeur comportant un deuxième type de support, lesdits convoyeurs étant disposés dans le prolongement l'un de l'autre. L'inconvénient majeur de ces dispositifs de convoyage réside dans le fait que, lors du transfert des fruits entre les deux convoyeurs, ces fruits chutent d'une hauteur qui, tout en étant relativement faible, provoque fréquemment le talage de ces derniers.

Un deuxième type de dispositif de convoyage décrit notamment dans le brevet EP-A-540 126 comporte un convoyeur unique doté de moyens-supports de fruits multifonctions, comprenant des organes supports aptes à s'escamoter ou a supporter les fruits en fonction de l'opération effectuée (chargement, examen colorimétrique, pesée, déchargement...). De tels dispositifs pallient l'inconvénient précité car les fruits ne subissent pas de chocs lors des déplacements relatifs des organes-supports. Par contre, ils nécessitent des moyens-supports très complexes et par conséquent relativement onéreux, et d'une fragilité relativement importante. De plus, les frais de maintenance de tels convoyeurs sont élevés en raison notamment de la complexité et du nombre de supports à nettoyer régulièrement pour ne pas fausser les mesures (pesée...).

La présente invention vise à pallier les inconvénients précités des dispositifs connus et a pour objectif essentiel de fournir un dispositif de convoyage, d'une part doté d'organes-supports des fruits de conception simple et, d'autre part, assurant toutes les opérations de chargement, sélection, déchargement... des fruits sans risque de talage de ces derniers.

Un autre objectif de l'invention est de fournir un dispositif de convoyage pouvant réaliser, outre d'autres opérations de sélection, un calibrage pondéral des fruits.

A cet effet, l'invention vise un dispositif de convoyage comprenant un premier convoyeur doté d'une zone de chargement des produits et comportant une pluralité de rouleaux, et un deuxième convoyeur, s'étendant sur sa plus grande longueur dans le prolongement du premier convoyeur et comportant une pluralité de mains de convoyage qui présentent une face supérieure de forme générale concave apte à assurer le support d'un fruit, lesdites mains étant maintenues dans une position de convoyage par un système de verrouillage avec des moyens de déclenchement adaptés pour engendrer de façon sélective le basculement desdites mains en vue du déchargement des produits portés par celles-ci dans des zones de déchargement.

Selon l'invention, ce dispositif de convoyage se caractérise en ce que :
- les rouleaux du premier convoyeur sont montés libres en rotation autour d'un axe porté par une chaîne sans fin et s'étendant orthogonalement par rapport à cette dernière, lesdits rouleaux étant espacés de façon que deux rouleaux successifs définissent entre eux un logement pour un produit, et étant constitués de disques parallèles maintenus espacés disposés orthogonalement par rapport à l'axe de rotation,
- les mains de convoyage du deuxième convoyeur sont articulées sur un support porté par une chaîne sans fin, et comportent une barre centrale s'étendant transversalement par rapport à ladite chaîne sans fin, et une pluralité de doigts disposés orthogonalement de part et d'autre de la barre centrale, lesdits doigts étant répartis de façon que les disques des rouleaux puissent s'intercaler entre ces derniers,
- le deuxième convoyeur présente une zone initiale de transfert où les chaînes des deux convoyeurs sont disposées côte à côte parallèlement l'une par rapport à l'autre,
- la chaîne du deuxième convoyeur est disposée à une certaine distance de celle du premier convoyeur, et les mains de convoyage sont réparties le long dudit deuxième convoyeur, de façon que :
   * dans la zone de transfert, chaque main vienne s'intercaler entre deux rouleaux, les doigts de ladite main et les disques desdits rouleaux venant s'imbriquer les uns dans les autres,
   * chaque main de convoyage assure le support du produit initialement logé entre deux rouleaux après escamotage desdits rouleaux lors de leur retour vers la zone de chargement.

Selon l'invention, le transfert des fruits entre les premier et deuxième convoyeurs est réalisé sans aucun risque de talage de ces fruits. En effet, les mains de convoyage viennent s'intercaler entre les rouleaux au niveau de la zone de transfert, et se substituent à ces rouleaux pour supporter les fruits, après escamotage desdits rouleaux lors de leur retour vers la zone de chargement.

Selon une autre caractéristique de l'invention, le premier convoyeur s'étend au niveau de la zone de chargement selon une rampe inclinée, et comporte une surface de roulement des rouleaux apte à engendrer une rotation desdits rouleaux autour de leur axe.

Les rouleaux sont ainsi entraînés en rotation au niveau de la zone de déchargement, soit par simple frottement sur la surface de roulement, soit de façon mécanique en utilisant une surface de roulement, telle qu'une courroie, amenée à défiler. De façon connue, une telle rotation a pour effet d'assurer une bonne répartition des fruits entre les rouleaux.

De plus, selon une autre caractéristique de l'invention, le premier convoyeur présente une portion de trajet horizontal en amont de la zone de transfert, équipée de moyens d'analyse de l'aspect externe des produits, ledit convoyeur comportant au niveau de cette zone d'analyse, une surface de roulement des rouleaux apte à engendrer une rotation desdits rouleaux autour de leur axe.

En outre, selon une autre caractéristique de l'invention, le dispositif de convoyage comprend un troisième convoyeur, intermédiaire, de pesage, interposé sur le trajet du deuxième convoyeur, ledit convoyeur de pesage comportant :
- une pluralité de chariots montés transversalement sur une chaîne sans fin avec une liberté d'oscillation verticale, comportant des plaques support verticales espacées définissant une face supérieure de support de forme générale concave, et présentant une échancrure centrale, lesdits chariots étant agencés pour loger, chacun, une main de convoyage dans une position où la barre centrale de ladite main s'étend dans les échancrures des plaques et où les doigts s'étendent entre lesdites plaques, et à assurer momentanément le support des produits,
- des moyens de pesage comportant une surface de glissement des chariots dotée de zones de pesage desdits chariots.

Ce troisième convoyeur permet de réaliser un calibrage pondéral des produits, au moyen de chariots venant se substituer momentanément aux mains de convoyage pour assurer le support desdits produits, et s'escamotant ensuite une fois la pesée effectuée, les transferts étant toujours réalisés sans que le produit ne subisse de chocs.

De plus, selon un mode de réalisation préférentiel, les plaques verticales des chariots comportent des encoches ménagées en regard vers leurs extrémités avant et arrière, et définissant deux gorges transversales, chacun desdits chariots étant :
- associé a un axe transversal, dit de traction, de diamètre inférieur à la hauteur des encoches, solidarisé à la chaîne sans fin vers une de ses extrémités et s'étendant à l'intérieur de la gorge avant, ledit axe étant relié à l'extrémité arrière des chariots au moyen de deux bielles latérales,
- agencé pour que la gorge arrière d'un chariot loge l'axe transversal de traction du chariot suivant.

De plus, selon une autre caractéristique de l'invention, le dispositif de convoyage comprend une bande transporteuse sans fin disposée latéralement sur le côté du deuxième convoyeur, dans la zone de déchargement, de façon d'une part à réceptionner les produits déchargés et assurer leur transfert vers des zones de stockage et, d'autre part, à amortir la chute de l'extrémité des mains de convoyage, ladite bande comportant des moyens d'entraînement aptes à la faire défiler sensiblement à la même vitesse que la vitesse d'avancement du deuxième convoyeur.

Une telle bande transporteuse, outre le fait qu'elle amortit la chute des mains de convoyage, a pour rôle d'éviter que les fruits ne se talent lors de leur déchargement.

De plus, en vue de diminuer encore les risques de talage des fruits, le dispositif comprend avantageusement des rouleaux à brosses entraînés en rotation autour d' axes horizontaux parallèles au sens d'avancement des convoyeurs, lesdits rouleaux à brosses étant interposes entre la bande transporteuse et les zones de stockage. De tels rouleaux-brosses ont, en effet, pour résultat de freiner la vitesse des fruits parvenant dans les zones de stockage.

Par ailleurs, le deuxième convoyeur comporte avantageusement deux lignes de convoyage composées de mains de convoyage disposées de part et d'autre d'une chaîne sans fin unique, le premier convoyeur comportant également deux lignes de convoyage équipées chacune d'une pluralité de rouleaux portés par une chaîne sans fin, et agencées pour coopérer chacune avec une des lignes de convoyage du deuxième convoyeur.

De plus, le premier convoyeur comporte, alors, avantageusement, au niveau de la zone de chargement, une pièce de séparation centrale disposée entre les rouleaux de chaque ligne de convoyage, de façon à assurer le guidage des produits vers l'une ou l'autre ligne.

Selon une autre caractéristique de l'invention, le premier convoyeur comporte une roue dentée d'extrémité aval, et le deuxième convoyeur comporte une roue dentée d'extrémité amont, montées sur un même arbre de rotation transversal.

De plus, de façon avantageuse, en vue d'éviter la chute d'un fruit lors du transfert, résultant d'un éventuel dysfonctionnement des moyens de verrouillage d'une main de convoyage :
- le dispositif comprend un disque intermédiaire monté sur l'arbre de rotation transversal entre les roues dentées des premier et deuxième convoyeurs, en vue du support éventuel des mains de convoyage,
- le deuxième convoyeur comporte une glissière d'appui éventuel de l'extrémité des mains de convoyage, s'étendant latéralement par rapport audit deuxième convoyeur entre la zone de transfert et la première zone de déchargement.

En cas de non verrouillage d'une main de convoyage, celle-ci est donc soutenue jusqu'à la première zone de déchargement, évitant ainsi la chute du fruit.

Par ailleurs, selon une autre caractéristique de l'invention, le système de verrouillage comprend un loquet comportant un crochet articulé sur le support et agencé pour coopérer avec un axe de verrouillage monté sur la main de convoyage, et des moyens élastiques de sollicitation du crochet vers sa position de verrouillage, lesdits crochet et axe étant disposés de façon a coopérer, après basculement de la main de convoyage, sous l'effet d'un basculement inverse obtenu par gravité lors du retour de ladite main de convoyage vers la zone de transfert.

Les mains de verrouillage se trouvent donc verrouillées automatiquement du fait de leur poids lors du trajet de retour vers la zone de transfert. Toutefois, afin de garantir ce verrouillage, le dispositif comprend préférentiellement un organe d'appui disposé sur le trajet de retour des mains de convoyage vers la zone de transfert, et adapté pour venir en contact supérieur avec lesdites mains de convoyage disposées en position inversée.

D'autres caractéristiques, buts et avantages de l'invention ressortiront de la description détaillée qui suit en référence aux dessins annexés qui en représentent à titre d'exemple non limitatif un mode de réalisation préférentiel. Sur ces dessins qui font partie intégrante de la présente description :

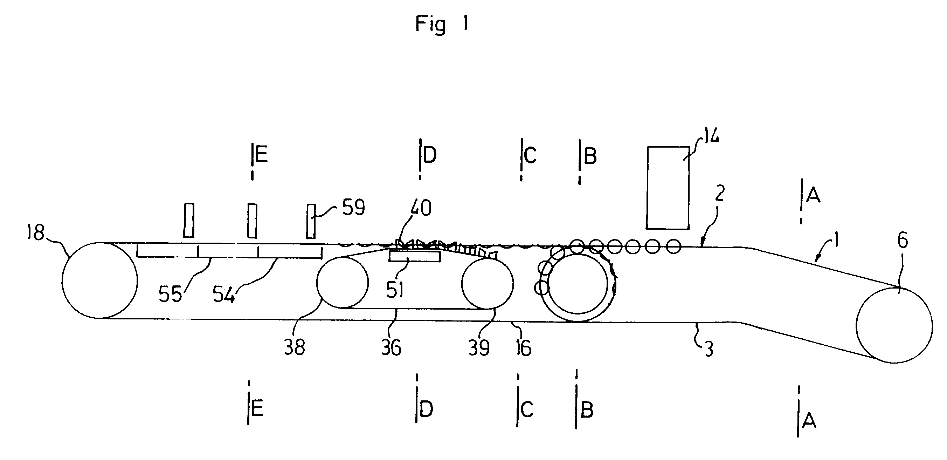

- la figure 1 est une vue schématique longitudinale d'un dispositif conforme à l'invention,

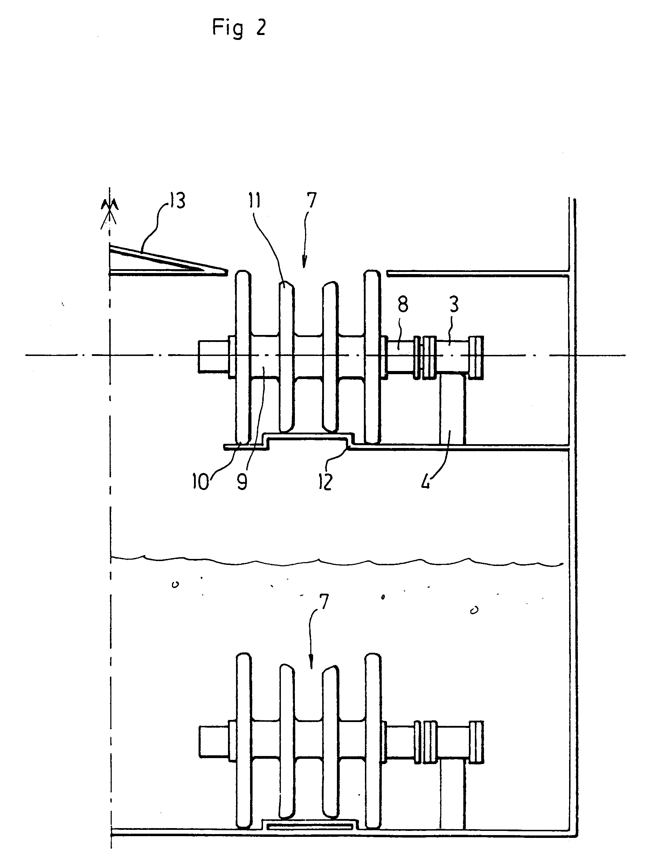

- la figure 2 en est une demi-coupe transversale par un plan vertical A,

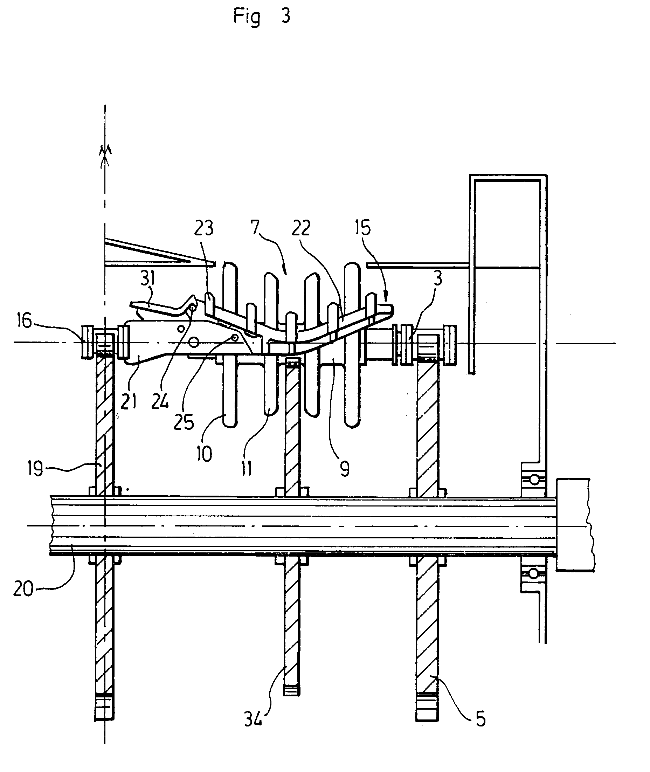

- la figure 3 en est une demi-coupe transversale par un plan vertical B,

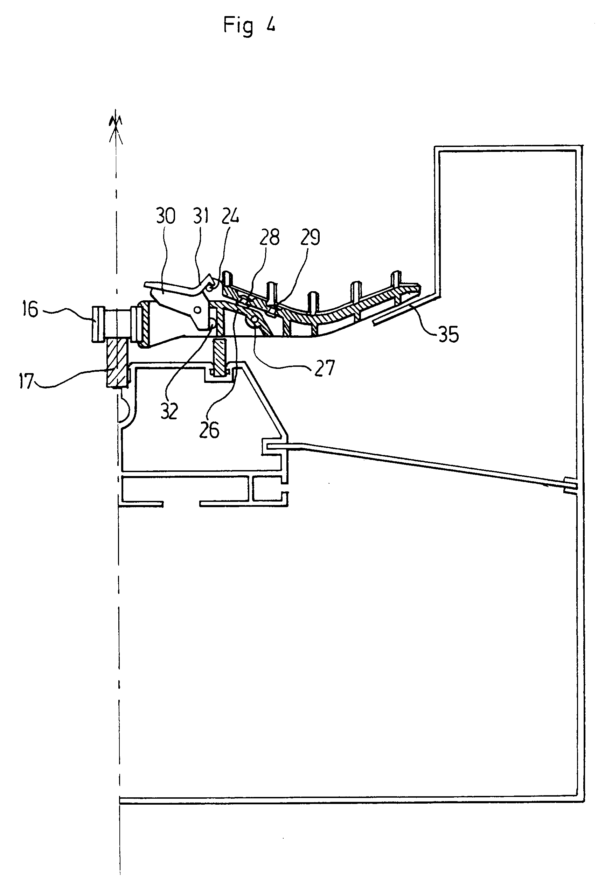

- la figure 4 en est une demi-coupe transversale par un plan vertical C,

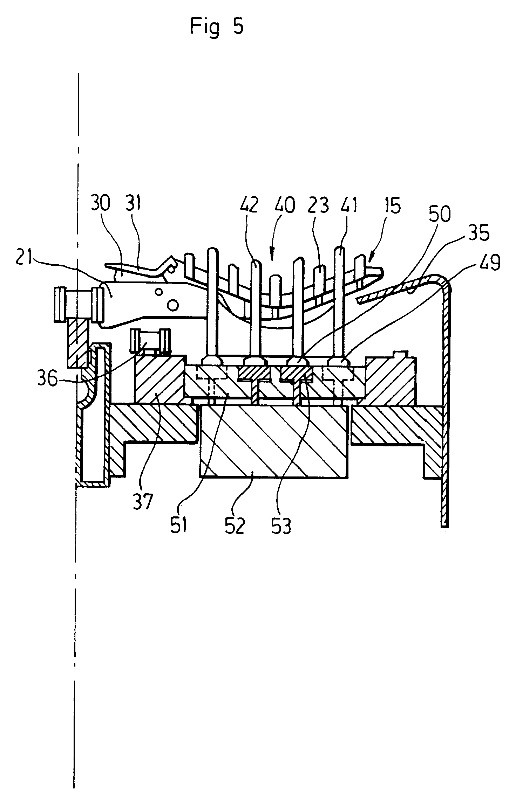

- la figure 5 en est une demi-coupe transversale par un plan vertical D,
- la figure 6 en est une demi-coupe transversale par un plan vertical E,

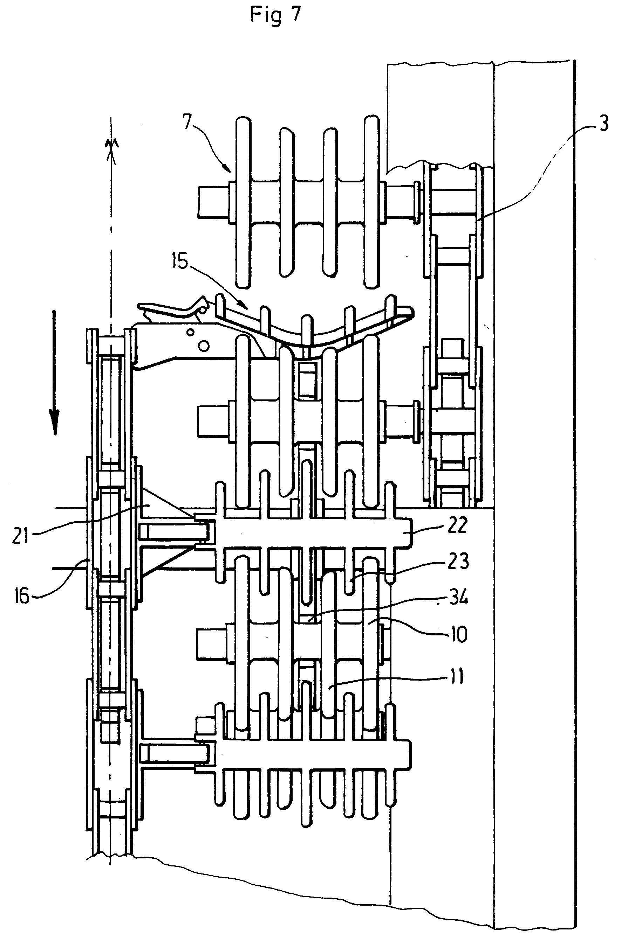

- la figure 7 est une demi-vue de dessus partielle de ce dispositif au droit de la zone de transfert,

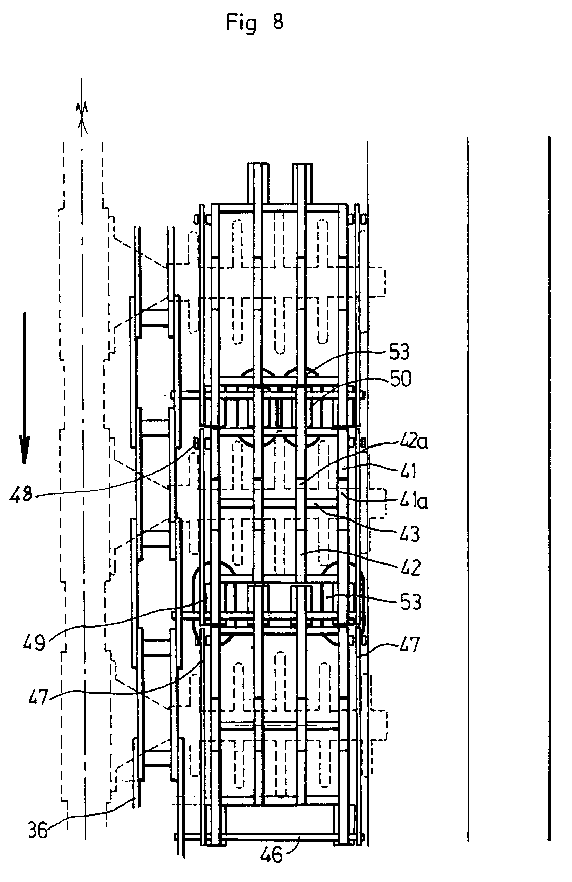

- la figure 8 est une demi-vue de dessus partielle de ce dispositif au droit de la zone de pesée,

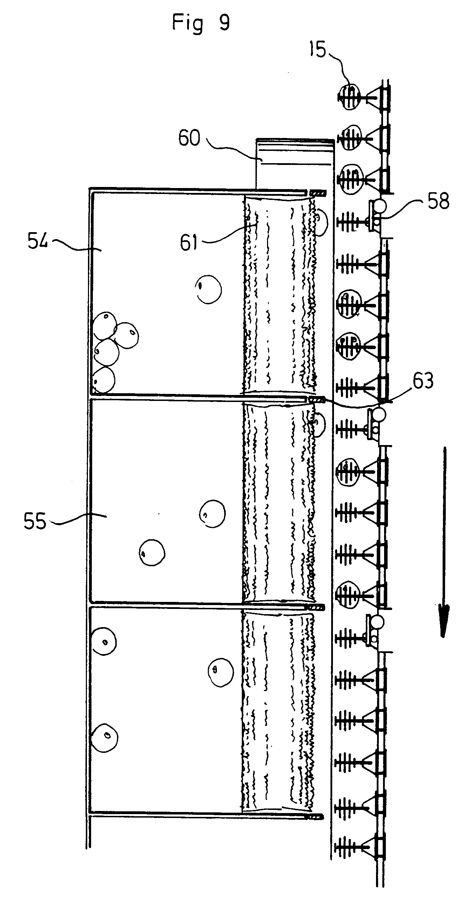

- la figure 9 est une demi-vue de dessus partielle de ce dispositif, à une échelle réduite, au droit de la zone de déchargement,
- la figure 10a est une vue latérale d'un chariot de pesée conforme à l'invention,
- la figure 10b est une vue latérale d'une tige de liaison associée à ce chariot,
- et la figure 11 est une vue transversale d'une variante des moyens de déclenchement, représentés en trait plein dans leur position de non sollicitation du système de verrouillage des mains de convoyage, et en traits pointillés dans leur position de basculement de la main de convoyage.

Le dispositif de convoyage représenté aux figures est adapté pour effectuer un tri de produits tels que fruits ou légumes en fonction de critères de sélection prédéterminés tels que le poids et l'aspect externe de ces derniers.

Ce dispositif se divise principalement en une zone de chargement de fruits, par exemple provenant en vrac dans un courant d'eau, une zone d'analyse optique, une zone de transfert, une zone de pesée et une zone de déchargement.

Dans les zones de chargement et d'analyse optique, les fruits sont transportés par un premier convoyeur, puis transférés sur un deuxième convoyeur dans la zone de transfert, ce deuxième convoyeur assurant leur transport jusque dans la zone de déchargement. En outre, un troisième convoyeur intermédiaire, interposé sur le trajet du deuxième convoyeur, prend en charge momentanément les fruits en vue d'assurer leur pesée. De plus, chacun des convoyeurs comporte deux lignes de convoyage.

En premier lieu, le premier convoyeur est composé de deux lignes de convoyage séparées et identiques, réparties symétriquement de part et d'autre d'un plan de symétrie longitudinal.

Chacune de ces lignes de convoyage comporte une zone de chargement, s'étendant selon une rampe inclinée 1 et une zone d'analyse optique 2 disposée sur une portion de trajet horizontal.

Chaque ligne de convoyage comporte une chaîne sans fin 3 supportée par un profilé 4 et engrenée autour de deux roues dentées 5, 6.

Ces lignes de convoyage sont équipées d'une pluralité de rouleaux tels que 7, adaptés pour définir deux à deux des logements pour les fruits, montés libre en rotation autour d'un axe de rotation 8 solidaire de la chaîne sans fin et s'étendant transversalement par rapport à celle-ci.

Chacun des rouleaux 7 comporte un manchon central 9 monté sur l'axe de rotation 8 et des disques verticaux, tels que 10, 11, espacés, s'étendant radialement autour du manchon central 9. Ces disques 10, 11 présentent, en outre, des diamètres différents adaptés pour que chaque rouleau 7 présente une forme externe biconique concave.

En l'exemple, les disques sont au nombre de quatre : deux disques latéraux tels que 10 de même diamètre, et deux disques centraux tels que 11 de même diamètre, inférieur à celui des disques latéraux. De plus, les tranches de ces disques 10, 11 sont usinées de façon à délimiter une surface d'appui de forme concave.

De plus, chaque ligne de convoyage du premier convoyeur comporte, au niveau de la zone de chargement 1, une surface de roulement 12, fixe tel que représenté aux figures, ou mobile telle qu'une courroie, apte à provoquer la rotation des rouleaux 7 autour de leur axe de rotation.

Le premier convoyeur comprend, par ailleurs, une pièce de séparation centrale 13 de forme générale triangulaire, disposée longitudinalement entre les rouleaux 7 respectifs des deux lignes de convoyage et adaptée pour assurer le guidage des fruits vers l'une ou l'autre desdites lignes de convoyage.

En dernier lieu, le premier convoyeur comporte, de façon classique, dans la zone d'analyse optique 2, des moyens d'entraînement en rotation des rouleaux 7 (non représentés) tel que surface de roulement, courroie... aptes à engendrer une rotation desdits rouleaux à l'aplomb de moyens d'analyse optique 14 de tout type connu en soi tels que caméra...

Le deuxième convoyeur comporte, quant à lui, deux lignes de convoyage équipées chacune de mains de convoyage 15 disposées transversalement de part et d'autre d'une chaîne sans fin 16 unique supportée par un profilé 17 s'étendant dans le plan de symétrie longitudinal du dispositif de convoyage.

La chaîne sans fin 16 est engrenée autour de deux roues dentées 18, 19 : une roue dentée 18 disposée au niveau de l'extrémité aval du dispositif de convoyage, et une roue dentée 19 montée sur l'arbre 20 d'entraînement en rotation des roues dentées aval 5 du premier convoyeur. Chaque main de convoyage 15 est montée articulée sur un support 21 solidarisé à la chaîne sans fin 16, lesdits support et main de convoyage étant dotés de moyens de verrouillage aptes à maintenir chaque main dans une position de convoyage où elle peut porter un fruit, et à permettre le pivotement de cette main vers une position de déchargement du fruit.

En premier lieu, chaque main de convoyage 15 comporte une barre centrale transversale 22 de forme concave, de part et d'autre de laquelle s'étendent orthogonalement une pluralité de doigts tels que 23 disposés en regard les uns des autres et incurvés vers le haut, de façon à conférer à ladite main une forme de cuvette allongée selon une direction transversale par rapport à la chaîne sans fin 16, apte à loger un fruit.

De plus, chaque main de convoyage 15 est disposée de façon à venir s'intercaler entre deux rouleaux 7 au droit de la zone de transfert, les doigts 23, en l'exemple au nombre de cinq, étant agencés pour venir encadrer les disques 10, 11 desdits rouleaux.

En outre, la barre centrale 22 présente une section en forme de U renversé dont les deux ailes prolongent l'âme au niveau de l'extrémité de fixation sur le support 21, de façon à former une chape logeant un axe de verrouillage horizontal 24. De plus, les deux ailes de ce U sont percées, à distance de l'extrémité précitée, de deux orifices en regard pour le logement de l'axe 25 d'articulation de la main de convoyage 15 sur le support 21.

Ce support 21 présente, quant à lui, vue de dessus, la forme d'un T dont chaque aile est solidarisée à la chaîne sans fin 16. La branche de ce T présente, quant à elle, une extrémité 26 comportant longitudinalement une portion en forme de V inversé, d'appui de l'extrémité de la barre centrale 22, respectivement dans ses deux positions de convoyage et de déchargement. Cette extrémité 26 du support 21 est agencée pour être coiffée par la barre transversale 22, et comporte un manchon 27 apte à loger l'axe d'articulation 25.

De plus, la barre centrale 22 est dotée de deux orifices ménagés dans l'âme de ladite barre et aptes à loger chacun un patin 28, 29 d'appui sur l'extrémité 26 du support 21 respectivement dans les positions de convoyage et de déchargement de la main de convoyage.

Les moyens de verrouillage comprennent, quant a eux, un système de loquet comportant une pièce pivotante 30 articulée sur le support 21 et dotée d'un crochet 31 agencé pour coopérer avec l'axe de verrouillage 24 de la main de convoyage. De plus, ce système de loquet comporte un tampon 32 en matériau élastomère porté par le support et agencé pour solliciter la pièce pivotante 30 vers sa position de verrouillage.

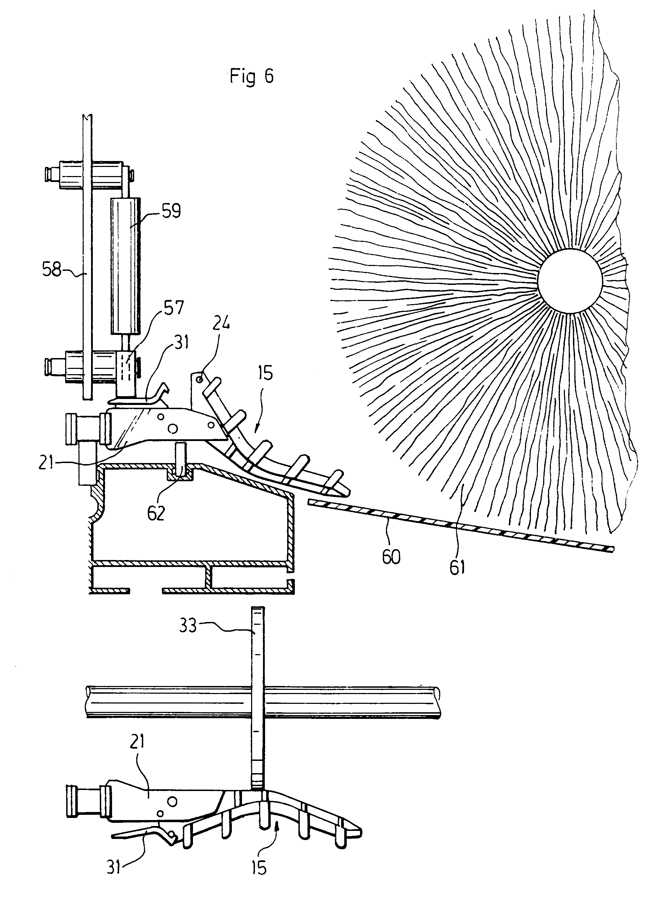

Les moyens de verrouillage comportent, enfin, pour chaque ligne de convoyage du deuxième convoyeur, un organe d'appui 33 (représenté à la figure 6) constitué d'un disque vertical interpose sur le trajet de retour dudit convoyeur, et agencé pour venir en contact tangentiel avec chaque main de convoyage 15, disposée dans sa position renversée, de façon a assurer le verrouillage de cette dernière.

Le deuxième convoyeur comporte, par ailleurs, des organes de sécurité aptes à empêcher le basculement de chaque main de convoyage entre la zone de transfert et la zone de déchargement en cas de déficience des moyens de verrouillage.

Ces organes de sécurité comportent, en premier lieu, pour chaque ligne de convoyage, un disque 34 porté par l'arbre de rotation 20 entre les roues dentées 5, 19 des premier et deuxième convoyeurs, ledit disque étant agencé pour venir en contact tangentiel sous chaque main de convoyage 15, et présentant une tranche dotée d'encoches pour le passage des rouleaux 7.

Ces organes de sécurité comprennent, en outre, une glissière latérale 35 d'appui éventuel de l'extrémité des mains de convoyage, s'étendant longitudinalement entre la zone de transfert et la zone de déchargement.

Le troisième convoyeur, disposé entre la zone de transfert et la zone de déchargement, comporte deux lignes de convoyage interposées chacune sur le trajet d'une ligne de convoyage du deuxième convoyeur.

Chacune de ces lignes de convoyage comporte une chaîne sans fin 36 montée sur un profilé 37 et engrenée autour de deux roues dentées 38, 39.

Chaque ligne de convoyage est équipée de chariots 40 comportant des plaques supports verticales espacées telles que 41, 42, reliées au niveau de leur extrémité inférieure par des traverses 43 et présentant des hauteurs différentes de façon que lesdits chariots présentent transversalement une face supérieure d'appui de forme concave.

De plus, chacune de ces plaques 41, 42 comporte une échancrure centrale 41a, 42a et présente une tranche supérieure s'étendant vers le haut, de part et d'autre de ladite échancrure, de façon à former une face supérieure de support des fruits présentant la forme d'une cuvette.

En l'exemple, ces plaques sont au nombre de quatre : deux plaques latérales telles que 41 de même hauteur, et deux plaques centrales telles que 42 de même hauteur, inférieure à celle des plaques centrales 42, lesdites plaques latérale 41 et centrale 42 étant décalées longitudinalement et dotées chacune d'une encoche 44, 45 ménagée respectivement au droit de leur extrémité arrière (plaques centrales) et avant (plaques latérales), et formant deux gorges transversales.

Les moyens supports de ces chariots 40 comprennent, en premier lieu, un axe transversal de traction 46 de diamètre inférieur à la hauteur des encoches 44, 45, solidarisé à la chaîne sans fin 36 vers une de ses extrémités et s'étendant à l'intérieur de la gorge avant.

Ces moyens supports comportent, en outre, deux bielles latérales telles que 47, disposées de part et d'autre du chariot 40 et articulées respectivement sur l'axe transversal 46 et sur un ergot 48 en saillie par rapport à la face externe des plaques latérales 41, vers l'extrémité arrière de ces dernières.

En outre, les chariots 40 sont agencés les uns derrière les autres de façon que la gorge arrière (encoches 45) d'un chariot soit dans l'alignement de la gorge avant (encoches 44) du chariot suivant, la zone arrière du premier chariot étant ainsi supportée par l'axe de traction 46 du chariot suivant.

En dernier lieu, chaque plaque 41, 42 est dotée d'un talon inférieur d'appui tel que 49, 50, disposé vers l'extrémité avant des plaques latérales 41, et vers l'extrémité arrière des plaques centrales 42.

Chacun de ces chariots 40 est agencé pour venir loger une main de convoyage 15, la barre centrale 22 s'étendant dans les échancrures 41a, 42a, et les doigts 23 étant disposés de part et d'autre des plaques 41, 42. De plus, la hauteur des plaques 41, 42 est adaptée pour que le fruit se trouve porté par le chariot 40, et non par la main de convoyage 15 lorsque lesdits chariot et main sont imbriqués l'un dans l'autre.

Le troisième convoyeur comprend, enfin, des moyens de pesage classiques, comportant une glissière 51 dotée d'une face supérieure de glissement des talons d'appui 49, 50 des chariots, équipée d'une balance 52 comportant quatre zones de pesage telles que 53 agencées pour se trouver chacune à l'aplomb d'un desdits talons d'appui.

La zone de déchargement vers laquelle les fruits sont amenés, portés par les mains de convoyage, comporte des casiers tels que 54, 55 disposés les uns à la suite des autres latéralement de part et d'autre des lignes de convoyage.

De plus, des moyens de déclenchement des moyens de verrouillage sont associés à chacun de ces casiers. Ces moyens de déclenchement comprennent une came 57 dotée d'une rampe d'accès, d'une face plane active et d'une rampe de sortie, et montée pivotante autour d'un axe transversal sur une plaque verticale fixe 58 disposée au-dessus de la ligne de convoyage, dans l'alignement, transversalement, du début de chaque casier 54, 55. Cette came 57 est articulée sur la tige d'un vérin 59 apte à la faire pivoter entre une position haute où elle laisse librement passer la pièce pivotante 30 maintenant verrouillée la main de convoyage 15, et une position basse où elle se trouve disposée sur le trajet de cette pièce pivotante et ou elle entraîne son pivotement et par conséquent la chute de la main de convoyage 15.

De plus, au droit de chaque came 57 se trouve dispose un patin d'appui 62 agence sous le support 21 des mains de convoyage, vers l'extrémité de celui-ci, et destiné à éviter une éventuelle déformation de ce support. Ce patin 62 s'étend, en outre, longitudinalement de part et d'autre de chaque zone de déclenchement de façon à assurer la stabilisation des lignes de convoyage du deuxième convoyeur au cas où une de ces lignes se trouve transporter beaucoup plus de fruits que l'autre.

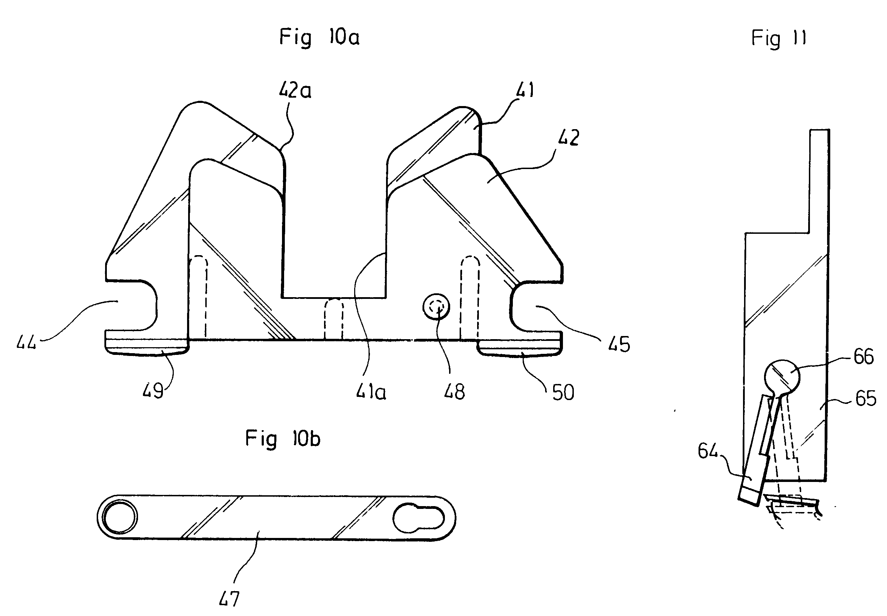

La figure 11 représente une variante de réalisation des moyens de déclenchement selon laquelle ces derniers comprennent une came 64 dotée d'une rampe d'accès, d'une face plane active et d'une rampe de sortie, montée pivotante autour d'un axe longitudinal sur un support fixe 59.

Cette came est associée à un électro-aimant rotatif 66 apte à la faire pivoter entre une position (représentée en traits pleins à la figure 11) où elle se trouve décalée latéralement par rapport à la trajectoire du crochet 31 et où elle laisse passer librement la pièce pivotante 30, et une position (représentée en traits pointillés à la figure 11) où elle se trouve sur le trajet du crochet 31 et où elle entraîne son pivotement.

Par ailleurs, la zone de déchargement est équipée, pour chaque ligne de convoyage, d'une bande transporteuse longitudinale 60 apte à défiler à la même vitesse que ladite ligne de convoyage, et interposée entre celle-ci et les casiers 54, 55.

Cette bande transporteuse 60 est destinée à amortir la chute des mains de convoyage 15 et des fruits.

De plus, chaque casier est équipé d'un rouleau-brosse 61 destiné à freiner les fruits, monté rotatif autour d'un axe longitudinal horizontal et disposé parallèlement à la bande transporteuse 60.

Enfin, un volet à axe horizontal, schématisé en 63, est disposé au-dessus de la bande transporteuse 60, dans le prolongement de chaque cloison de séparation entre les casiers 54, 55. Ce volet 63 agencé pour être soulevé lorsqu'un fruit est présent sur la bande transporteuse 60 au droit d'une cloison de séparation, présence signifiant que le casier précédent est rempli, est destine a constituer un organe de détection apte à commander un arrêt d'urgence.

## Revendications

1. Dispositif de convoyage de produits, notamment de fruits, adapté pour effectuer un triage desdits produits en fonction de critères de sélection prédéterminés, comprenant un premier convoyeur doté d'une zone (1) de chargement des produits et comportant une pluralité de rouleaux (7), et un deuxième convoyeur, s'étendant sur sa plus grande longueur dans le prolongement du premier convoyeur et comportant une pluralité de mains de convoyage (15) qui présentent une face supérieure de forme générale concave apte à assurer le support d'un fruit, lesdites mains étant maintenues dans une position de convoyage par un système de verrouillage (24, 30, 31) avec des moyens de déclenchement (57, 59 ; 64, 66) adaptés pour engendrer de façon sélective le basculement desdites mains en vue du déchargement des produits portés par celles-ci dans des zones de déchargement (54, 55),
ledit dispositif de convoyage étant caractérisé en ce que :
- les rouleaux (7) du premier convoyeur sont montés libres en rotation autour d'un axe (8) porté par une chaîne sans fin (3) et s'étendant orthogonalement par rapport à cette dernière, lesdits rouleaux étant espacés de façon que deux rouleaux (7) successifs définissent entre eux un logement pour un produit, et étant constitués de disques parallèles (10, 11) maintenus espacés disposés orthogonalement par rapport à l'axe de rotation (8),
- les mains de convoyage (15) du deuxième convoyeur sont articulées sur un support (21) porté par une chaîne sans fin (16), et comportent une barre centrale (22) s'étendant transversalement par rapport à ladite chaîne sans fin (16), et une pluralité de doigts (23) disposés orthogonalement de part et d'autre de la barre centrale (22), lesdits doigts étant répartis de façon que les disques (10, 11) des rouleaux (7) puissent s'intercaler entre ces derniers,
- le deuxième convoyeur présente une zone initiale de transfert où les chaînes (3, 16) des deux convoyeurs sont disposées côte à côte parallèlement l'une par rapport à l'autre,
- la chaîne (16) du deuxième convoyeur est disposée à une certaine distance de celle du premier convoyeur, et les mains de convoyage (15) sont réparties le long dudit deuxième convoyeur, de façon que :
* dans la zone de transfert, chaque main (15) vienne s'intercaler entre deux rouleaux (7), les doigts (23) de ladite main et les disques (10, 11) desdits rouleaux venant s'imbriquer les uns dans les autres,
* chaque main de convoyage (15) assure le support du produit initialement logé entre deux rouleaux (7) après escamotage desdits rouleaux lors de leur retour vers la zone de chargement (1).

2. Dispositif de convoyage selon la revendication 1, caractérisé en ce qu'il comprend un troisième convoyeur, intermédiaire, de pesage, interposé sur le trajet du deuxième convoyeur, ledit convoyeur de pesage comportant :
- une pluralité de chariots (40) montés transversalement sur une chaîne sans fin (36) avec une liberté d'oscillation verticale, comportant des plaques support verticales (41, 42) espacées, définissant une face supérieure de support de forme générale concave, et présentant une échancrure centrale (41a, 42a), lesdits chariots étant agencés pour loger, chacun, une main de convoyage (15) dans une position où la barre centrale (22) de ladite main s'étend dans les échancrures (41a, 42a) des plaques (41, 42) et où les doigts (23) s'étendent entre lesdites plaques, et à assurer momentanément le support des produits,
- des moyens de pesage comportant une surface (51) de glissement des chariots (40) dotée de zones de pesage (53) desdits chariots.

3. Dispositif de convoyage selon l'une des revendications 1 ou 2, caractérisé en ce que le deuxième convoyeur comporte deux lignes de convoyage composées de mains de convoyage (15) disposées de part et d'autre d'une chaîne sans fin unique (16), le premier convoyeur comportant également deux lignes de convoyage équipées chacune d'une pluralité de rouleaux (7) portés par une chaîne sans fin (3), et agencées pour coopérer chacune avec une des lignes de convoyage du deuxième convoyeur.

4. Dispositif de convoyage selon la revendication 3, caractérisé en ce que le premier convoyeur comprend, au niveau de la zone de chargement (1), une pièce de séparation centrale (13) disposée entre les rouleaux (7) de chaque ligne de convoyage, de façon à assurer le guidage des produits vers l'une ou l'autre ligne.

5. Dispositif de convoyage selon l'une des revendications précédentes, caractérisé en ce que les disques (10, 11) de chaque rouleau (7) présentent des diamètres différents adaptés pour conférer audit rouleau une forme externe biconique concave.

6. Dispositif de convoyage selon l'une des revendications précédentes, caractérisé en ce que le premier convoyeur s'étend, au niveau de la zone de chargement (1), selon une rampe inclinée, et comporte une surface (12) de roulement des rouleaux (7) apte à engendrer une rotation desdits rouleaux autour de leur axe (8).

7. Dispositif de convoyage selon l'une des revendications précédentes, caractérisé en ce que le premier convoyeur présente une portion de trajet horizontal (2) en amont de la zone de transfert, équipée de moyens (14) d'analyse de l'aspect externe des produits, ledit convoyeur comportant au niveau de cette zone d'analyse, une surface de roulement des rouleaux (7) apte à engendrer une rotation desdits rouleaux autour de leur axe.

8. Dispositif de convoyage selon l'une des revendications précédentes, caractérisé en ce que le premier convoyeur comporte une roue dentée (5) d'extrémité aval, et le deuxième convoyeur comporte une roue dentée (19) d'extrémité amont, montées sur un même arbre de rotation transversal (20).

9. Dispositif de convoyage selon la revendication 8, caractérisé en ce qu'il comprend un disque intermédiaire (34) monté sur l'arbre de rotation transversal (20) entre les roues dentées (5, 19) des premier et deuxième convoyeurs, en vue du support éventuel des mains de convoyage (15).

10. Dispositif de convoyage selon l'une des revendications précédentes, caractérisé en ce que le deuxième convoyeur comporte une glissière (35) d'appui éventuel de l'extrémité des mains de convoyage (15), s'étendant latéralement par rapport audit deuxième convoyeur entre la zone de transfert et le première zone de déchargement.

11. Dispositif de convoyage selon l'une des revendications précédentes, caractérisé en ce que le système de verrouillage comprend un loquet comportant un crochet (31) articulé sur le support (21) et agencé pour coopérer avec un axe de verrouillage (24) monté sur la main de convoyage (15), et des moyens élastiques (32) de sollicitation du crochet (31) vers sa position de verrouillage, lesdits crochet et axe étant disposés de façon à coopérer, après basculement de la main de convoyage (15), sous l'effet d'un basculement inverse obtenu par gravité lors du retour de ladite main de convoyage vers la zone de transfert.

12. Dispositif de convoyage selon la revendication 11, caractérisé en ce que les moyens de déclenchement comprennent une came (57 ; 64) associée à des moyens de pivotement (59 ; 66) et agencée pour engendrer de façon sélective le pivotement des crochets (31).

13. Dispositif de convoyage selon l'une des revendications 11 ou 12, caractérisé en ce qu'il comprend une pièce d'appui (62) apte à soutenir l'extrémité inférieure des supports (21) des mains de convoyage (15) au droit des moyens de déclenchement (57, 59 ; 64, 66).

14. Dispositif de convoyage selon l'une des revendications 11 à 13, caractérisé en ce qu'il comprend un organe d'appui (33) disposé sur le trajet de retour des mains de convoyage (15) vers la zone de transfert, et adapté pour venir en contact supérieur avec lesdites mains de convoyage disposées en position inversée de façon à garantir le verrouillage de ces dernières.

15. Dispositif de convoyage selon l'une des revendications précédentes, caractérisé en ce qu'il comprend une bande transporteuse sans fin (60) disposée latéralement sur le côté du deuxième convoyeur, dans la zone de déchargement, de façon d'une part à réceptionner les produits déchargés et assurer leur transfert vers des zones de stockage (54, 55) et, d'autre part, à amortir la chute de l'extrémité des mains de convoyage (15), ladite bande comportant des moyens d'entraînement aptes à la faire défiler sensiblement à la même vitesse que la vitesse d'avancement du deuxième convoyeur.

16. Dispositif de convoyage selon la revendication 15, caractérisé en ce qu'il comprend des rouleaux à brosses (61) entraînés en rotation autour d'axes horizontaux parallèles au sens d'avancement des convoyeurs, lesdits rouleaux à brosses étant interposés entre la bande transporteuse (60) et les zones de stockage (54, 55).

17. Dispositif de convoyage selon l'une des revendications précédentes, caractérisé en ce que les zones de stockage sont constituées de casiers (54, 55) séparés à chacun desquels sont associés des moyens de déclenchement, un organe (63) de détection des produits étant disposé au-dessus de la bande transporteuse (60) au droit de la séparation entre deux casiers (54, 55) et adapté pour commander un arrêt des convoyeurs lors de la détection d'un fruit sur ladite bande transporteuse.

18. Dispositif de convoyage selon la revendication 2, caractérisé en ce que les plaques verticales (41, 42) des chariots comportent des encoches (44, 45) ménagées en regard vers leurs extrémités avant et arrière, et définissant deux gorges transversales, chacun desdits chariots étant :
- associé à un axe transversal (46), dit de traction, de diamètre inférieur à la hauteur des encoches (44, 45), solidarisé à la chaîne sans fin (36) vers une de ses extrémités et s'étendant à l'intérieur de la gorge avant, ledit axe étant relié à l'extrémité arrière des chariots (40) au moyen de deux bielles latérales (47),
- agencé pour que la gorge arrière d'un chariot (40) loge l'axe transversal de traction (46) du chariot suivant.

## Claims

1. Conveying device for products, especially for fruits, adapted for sorting said products according to predetermined selection criteria, comprising a first conveyor provided with a products loading zone (1) and comprising a plurality of rolls (7), and a second conveyor the longest length of which extends in the prolongation of the first conveyor, said second conveyor comprising a plurality of conveying hands (15) having a generally concave upper face, each being able to support one fruit, wherein said hands are held in a conveying position by means of a locking assembly (24, 30, 31) with releasing means (57, 59; 64, 66) adapted for selectively tilting said hands in order to unload said products supported by said hands into unloading zones (54, 55);
said conveying device being characterized in that:
- the rolls (7) on the first conveyor are mounted to rotate freely about an axis (8) supported by an endless chain (3) and extending orthogonally thereto, wherein said rolls are spaced apart so that two successive rolls (7) define between them a housing for one product, and are comprised of parallel disks (10, 11) held apart, arranged orthogonally to the rotation axis (8),
- the conveying hands (15) on the second conveyor are hinged on a support (21) supported by an endless chain (16), and comprise a central rod (22) extending transversally to said endless chain (16), and a plurality of fingers (23) arranged orthogonally on both sides of the central rod (22), said fingers being distributed so that the disks (10, 11) on the rolls (7) are able to interpose therebetween,
- the second conveyor has a zone of initial transfer where the chains (3, 16) of both conveyors are positioned side by side and parallel to each other,
- the chain (16) of the second conveyor is positioned some distance apart from that of the first conveyor, and the conveying hands (15) are distributed along said second conveyor so that:
* in the transfer zone, every hand (15) interposes between two rolls (7), the fingers (23) of said hand and the disks (10, 11) on said rolls imbricating in one another,
* every conveying hand (15) supports the product originally housed between two rolls (7), after the retraction of said rolls during the return thereof towards the loading zone (1).

2. Conveying device according to claim 1, characterized in that it comprises a third intermediate weighing conveyor positioned in the path of the second conveyor, said weighing conveyor comprising:
- a plurality of trolleys (40) mounted transversally on an endless chain (36) so as to oscillate freely along the vertical direction, comprising spaced apart vertical support plates (41, 42) defining a generally concave upper support face and having a central indentation (41a, 42a), said trolleys being arranged so that each one houses one conveying hand (15) in a position in which the central rod (22) of said hand extends in the indentations (41a, 42a) in the plates (41, 42) and the fingers (23) extend between said plates, and so that they temporarily support said products,
- weighing means comprising a sliding surface (51) for the trolleys (40), said surface being provided with weighing zones (53) for said trolleys.

3. Conveying device according to one of claims 1 or 2, characterized in that the second conveyor comprises two conveying lines comprised of conveying hands (15) positioned on both sides of one single endless chain (16), the first conveyor also comprising two conveying lines, each provided with a plurality of rolls (7) supported by an endless chain (3) and arranged so that each one of them cooperates with a respective one of the conveying lines of the second conveyor.

4. Conveying device according to claim 3, characterized in that the first conveyor comprises a central partition element (13) positioned between the rolls (7) on each conveying line in the region of the loading zone (1), in order to guide the products towards one line or the other.

5. Conveying device according to one of preceding claims, characterized in that the disks (10, 11) on each roll (7) have different diameters adapted to give said roll an external biconical concave shape.

6. Conveying device according to one of the preceding claims, characterized in that the first conveyor extends along a ramp in the region of the loading zone (1) and comprises a rolling surface (12) for the rolls (7), able to drive said rolls in a rotation about the axis (8) thereof.

7. Conveying device according to one of the preceding claims, characterized in that the first conveyor has a section of horizontal path (2) upstream of the transfer zone provided with means (14) to analyse the external aspect of the products, said conveyor comprising a rolling surface for the rolls (7) in the region of this analysis zone, which is able to drive said rolls in a rotation about the axis thereof.

8. Conveying device according to one of the preceding claims, characterized in that the first conveyor comprises a downstream end toothed wheel (5), and the second conveyor comprises a upstream end toothed wheel (19), both wheels being mounted on the same transverse rotation shaft (20).

9. Conveying device according to claim 8, characterized in that it comprises an intermediate disk (34) mounted on the transverse rotation shaft (20) between the toothed wheels (5, 19) of the first and second conveyors, for the optional support of the conveying hands (15).

10. Conveying device according to one of the preceding claims, characterized in that the second conveyor comprises a slide (35) for the optional support of the end of the conveying hands (15), which extends laterally in relation to said second conveyor between the transfer zone and the first unloading zone.

11. Conveying device according to one of the preceding claims, characterized in that the locking system comprises a latch provided with a hook (31) which is hinged on the support (21) and arranged to cooperate with a locking axis (24) mounted on the conveying hand (15), and resilient means (32) to bias the hook (31) towards the locking position thereof, said hook and axis being positioned so as to cooperate once the conveying hand (15) is tilted, as a consequence of a reverse tilting by the force of gravity during the return of said conveying hand towards the transfer zone.

12. Conveying device according to claim 11, characterized in that the releasing means comprise a cam (57; 64) associated with pivotment means (59; 66) and arranged to generate the pivotment of the hooks (31) in a selective manner.

13. Conveying device according to one of claims 11 or 12, characterized in that it comprises a supporting part (62) able to support the lower end of the supports (21) for the conveying hands (15) in the region of the releasing means (57, 59; 64, 66).

14. Conveying device according to one of claims 11 to 13, characterized in that it comprises a supporting member (33) positioned in the return path of the conveying hands (15) towards the transfer zone, and adapted to come in upper contact with said conveying hands positioned in the reverse position, in order to ensure the locking thereof.

15. Conveying device according to one of the preceding claims, characterized in that it comprises an endless conveying belt (60) positioned laterally on the side of the second conveyor, in the unloading zone, in order on the one hand to receive the unloaded products and transfer them towards storage zones (54, 55) and, on the other hand, dampen the fall of the end of the conveying hands (15), said belt comprising driving means able to move it substantially at a speed which equals the feeding speed of the second conveyor.

16. Conveying device according to claim 15, characterized in that it comprises brush rolls (61) rotatably driven about horizontal axes which are parallel to the feeding direction of the conveyors, said brush rolls being interposed between the conveying belt (60) and the storage zones (54, 55).

17. Conveying device according to one of the preceding claims, characterized in that the storage zones are comprised of individual racks (54, 55) each of which is associated with releasing means, a member (63) for detecting the products being positioned above the conveying belt (60) at the partition between two racks (54, 55) and adapted to make the conveyors stop upon detection of a fruit on said conveying belt.

18. Conveying device according to claim 2, characterized in that the vertical plates (41, 42) on the trolleys comprise notches (44, 45) provided opposite the front and rear ends thereof and defining two transverse grooves, wherein each of said trolleys:
- is associated with a so-called traction transverse axis (46) with a diameter smaller than the height of the notches (44, 45), attached to the endless chain (36) at one of the ends thereof and extending within the front groove, said axis being attached to the rear end of the trolleys (40) by means of two lateral connecting rods (47),
- is arranged such that the rear notch of a trolley (40) houses the traction transverse axis (46) of the next trolley.

## Patentansprüche

1. Fördereinrichtung für Produkte, insbesondere für Früchte, geeignet zur Sortierung dieser Produkte gemäß definierter Auswahlkriterien, die einen ersten, mit einer Ladezone (1) für die Produkte versehen und mit einer Vielzahl von Rollen (7) ausgestatteten Förderer umfaßt, sowohl einen zweiten Förderer, dessen längste Ausdehnung in der Verlängerung des ersten Förderers verläuft und der eine Vielzahl von Förderhänden (15) umfaßt, die eine obere, im allgemeinen konkav ausgeformte Seite aufweisen, die in der Lage ist, das Tragen einer Frucht sicherzustellen, und wobei die Hände mittels eines mit zur selektiven Schrägstellung der Hände Auslösemitteln (57, 59; 64, 66) ausgestatteten Verschlußsystems (24, 30, 31) in einer Förderposition gehalten werden, um die von den Händen getragene Produkte in einen Entladeraum (54, 55) abzuladen,
dadurch gekennzeichnet, daß
- die Rollen (7) des ersten Förderers so gelagert sind, daß sie frei um eine von einer Endloskette (3) getragene Achse (8) drehbar sind und sich rechtwinklig zu dieser Kette erstrecken, wobei die Rollen voneinander so entfernt sind, daß zwei aufeinanderfolgende Rollen (7) einen Raum für ein Produkt zwischeneinander bestimmen und aus parallelen, räumlich auseinandergehalten, rechtwinklig zur Rotationsachse (8) angeordneten Scheiben (10, 11) bestehen,
- die Förderhände (15) des zweiten Förderers drehbar an einem von einer Endloskette (16) gestützten Träger (21) gelagert sind und eine zentrale Verbindungsstange (22), die sich transversal zur Endloskette (16) erstreckt und einen Vielzahl von rechtwinklig an beiden Seiten der zentralen Verbindungsstange (22) angeordneten Fingern (23) aufweisen, wobei die Finger so verteilt sind, daß die auf die Rollen (7) angeordnete Scheiben (10, 11) zwischenhinein treten können,
- der zweite Förderer einen Anfangsübertragungsbereich aufweist, in welchem die Ketten (3, 16) beider Förderer nebeneinander und parallel positioniert sind,
- die Kette (16) des zweiten Förderers in definierten Abstand von jener des ersten Förderers angeordnet ist und die Förderhände (15) so entlang dem zweiten Förderer verteilt sind, daß:
* im Übertragungsbereich sich jede Hand (15) zwischen zwei Rollen (7) fügt, wobei die Finger (23) dieser Hand und die Scheiben (10, 11) auf den Rollen sich zwischeneinander verschränken, und
* jeder Förderhand (15) die Halterung des ursprünglich zwischen zwei Rollen (7) aufgenommenen Produktes sichert nach der Retraktion der Rollen während deren Rückzugs zum Ladebereich (1).

2. Fördereinrichtung gemäß Anspruch 1, dadurch gekennzeichnet, daß sie einen dritten, dazwischenliegenden Wiegeförderer einschließt, der in der Bahn des zweiten Förderers positioniert ist, wobei der Wiegeförderer:
- eine Vielzahl von transversal an einer Endloskette (36) angebracht Förderwagen (40) mit einer Möglichkeit, vertikal zu schwingen, die vertikale, räumlich getrennte, eine obere Stützfläche mit einer im allgemeinen konkaven Form darstellende Unterstützungsplatten (41, 42) und eine zentrale Ausnehmung (41a, 42a) aufweisen, wobei die Förderwagen so angeordnet sind, daß jeder eine Förderhand (15) in einer Position aufnimmt, in der die zentrale Verbindungsstange (22) der Hand in die Ausnehmungen (41a, 42a) den Platten (41, 42) eingreift, und die Finger (23) so zwischen die Platten erstrecken, daß sie vorübergehend den Halt der Produkte sichern, und
- Wiegemittel, die eine mit Wiegezonen (53) für die Förderwagen ausgestattete Oberfläche (51) für das Gleiten der Förderwagen (40) aufweisen,
umfaßt.

3. Fördereinrichtung gemäß einem der Ansprüche 1 oder 2, dadurch gekennzeichnet, daß der zweite Förderer zwei Förderstrecken aufweist, die aus an jeder Seite einer einzelnen Endloskette (16) angeordneten Förderhänden (15) bestehen, wobei der erste Förderer auch aus zwei Förderstrecken besteht, die jeweils mit einer Vielzahl von Rollen (7) ausgestattet, von einer Endloskette (3) unterstützt und so angeordnet sind, daß jede von diesen Förderstrecken mit einer der Förderstrecken des zweiten Förderers zusammenarbeitet.

4. Fördereinrichtung gemäß Anspruch 3, dadurch gekennzeichnet, daß der erste Förderer ein zentrales Trennelement (13) besitzt, das zwischen den Rollen (7) an jeder Förderstrecke im Bereich der Ladezone (1) positioniert ist, um die Führung der Produkte zu einer Strecke oder der anderen zu gewährleisten.

5. Fördereinrichtung gemäß einem der vorangehenden Ansprüche, dadurch gekennzeichnet, daß die Scheiben (10, 11) auf jeder Rolle (7) unterschiedliche Durchmesser aufweisen, um der Rolle eine äußere, bikonische, konkave Form zu geben.

6. Fördereinrichtung gemäß einem der vorangehenden Ansprüche, dadurch gekennzeichnet, daß der erste Förderer entlang einer geneigten Rampe in den Ladebereich (1) erstreckt und eine Oberfläche (12) für das Rollen der Rollen (7) aufweist, welche die Rollen in eine Rotation um deren Achse (8) bringt.

7. Fördereinrichtung gemäß einem der vorangehenden Ansprüche, dadurch gekennzeichnet, daß der erste Förderer einen, in der Vorschubsrichtung gesehen vor der Übertragungszone liegenden, mit Mitteln (14) zur Analyse der äußeren Beschaffenheit der Produkte, horizontalen Bahnausschnitt (2) aufweist, wobei der Förderer im Bereich dieser Analysezone eine Rollfläche für die Rollen (7) besitzt, welche in der Lage ist, die Rollen in eine Rotation um deren Achse zu bringen.

8. Fördereinrichtung gemäß einem der vorangehenden Ansprüche, dadurch gekennzeichnet, daß der erste Förderer am unteren Ende ein Zahnrad (5) besitzt, und daß der zweite Förderer am oberen Ende einen Zahnrad (19) aufweist, wobei beide Räder an derselben transversalen Rotationswelle (20) montiert sind.

9. Fördereinrichtung gemäß Anspruch 8, dadurch gekennzeichnet, daß sie eine Zwischenscheibe (34) besitzt, die an der transversalen Rotationswelle (20) zwischen den Zahnrädern (5, 19) des ersten und des zweiten Förderers zwecks der eventuellen Unterstützung der Förderhände (15) montiert ist.

10. Fördereinrichtung gemäß einem der vorangehenden Ansprüche, dadurch gekennzeichnet, daß der zweite Förderer eine sich für die eventuelle Unterstützung der Enden der Förderhände (15) seitlich in Verbindung mit dem zweiten Förderer zwischen der Übertragungs- und der ersten Ladezone erstreckende Führungsrutsche (35) aufweist.

11. Fördereinrichtung gemäß einem der vorangehenden Ansprüche, dadurch gekennzeichnet, daß das Verschlußsystem einen mit einem Haken (31) versehenen Riegel aufweist, der gelenkig an dem Träger (21) montiert und so angeordnet ist, daß er mit einer auf die Förderhand (15) montierten Verschlußachse (24) zusammenwirkt, und elastische Mittel (32) aufweist, um den Haken (31) gegen die Verschlußposition vorzuspannen, wobei der Haken und die Achse so positioniert sind, daß sie zusammenwirken, sobald die Förderhand (15) gekippt ist infolge eines durch die Schwerkraft während der Rückkehr der Förderhand in Richtung der Übertragungszone ausgelösten Rückschwenks.

12. Fördereinrichtung gemäß Anspruch 11, dadurch gekennzeichnet, daß die Auslösemittel eine mit Schwenkmitteln (59; 66) verbundene Nocke (57; 64) aufweisen, die so angeordnet ist, daß sie selektiv den Schwenk der Haken (31) betreibt.

13. Fördereinrichtung gemäß einem der Ansprüche 11 oder 12, dadurch gekennzeichnet, daß sie ein Unterstützungselement (62) umfaßt, daß in der Lage ist im Bereich der Lösevorrichtungen (57, 59; 64, 66) das untere Ende der Träger (21) der Förderhände (15) zu unterstützen.

14. Fördereinrichtung gemäß einem der Ansprüche 11 bis 13, dadurch gekennzeichnet, daß sie ein Unterstützungselement (33) umfaßt, das in der Rücklaufstrecke der Förderhände (15) zu der Übertragungszone positioniert und so angepaßt ist, daß es in oberen Kontakt mit den Förderhänden kommt, wenn diese in der Rückkehrposition sind, um deren Verriegelung sicher zu stellen.

15. Fördereinrichtung gemäß einem der vorangehenden Ansprüche, dadurch gekennzeichnet, daß sie ein endloses Förderband (60) umfaßt, das seitlich am zweiten Förderer in der Entladezone positioniert ist, um einerseits die entladenen Produkte aufzunehmen und ihren Transport zu den Lagerzonen (54, 55) sicherzustellen und andererseits den Fall vom Ende der Förderhände (15) zu dämpfen, wobei das Band Antriebsvorrichtungen aufweist, die in der Lage sind, es etwa mit einer Geschwindigkeit zu bewegen, die der Vorschubsgeschwindigkeit des zweiten Förderers angeglichen ist.

16. Fördereinrichtung gemäß Anspruch 15, dadurch gekennzeichnet, daß sie Bürstenwalzen (61) aufweist, die um horizontale, parallel zur Vorschubsrichtung der Förderer erstreckende Achsen in Rotation angetrieben sind, wobei die Bürstenwalzen zwischen dem Förderband (60) und den Lagerzonen (54, 55) geschaltet sind.

17. Fördereinrichtung gemäß einem der vorangehenden Ansprüche, dadurch gekennzeichnet, daß die Lagerzonen getrennte Fächer (54, 55) umfassen, die jeweils mit Auslösevorrichtungen versehen sind, wobei ein Detektionselement (63) zur Detektion der Produkte über dem Förderband (60) in dem Bereich der Unterteilung zwischen zwei Fächern (54, 55) angeordnet und angepaßt ist, um die Förderer aufgrund einer Ortung einer Frucht auf dem Förderband anzuhalten.

18. Fördereinrichtung gemäß Anspruch 2, dadurch gekennzeichnet, daß die vertikalen Platten (41, 42) auf den Förderwagen gegenüber den Vorder- und Rückseiten davon angeordnete Aussparungen (44, 45) aufweisen, die zwei transversale Nuten darstellen, wobei jeder der benannten Förderwagen:
- mit einer transversalen sogenannten Traktionsachse (46) verbunden ist, deren Durchmesser kleiner ist als die Höhe der Aussparungen (44, 45), die an einem Ende mit der Endloskette (36) verbunden ist und die in der vordere Aussparung erstreckt, wobei die Achse mit dem Hinterende den Förderwagen (40) durch zwei seitliche Verbindungsstangen (47) verbunden ist,
- so angepasst ist, daß die hintere Aussparung eines Förderwagens (40) die transversale Traktionsachse (46) des nächsten Förderwagens aufnimmt.
